# EUROPÄISCHE PATENTANMELDUNG

(11) **EP 1 109 126 A2**
(43) Veröffentlichungstag der Anmeldung: **20.06.2001**
(21) Anmeldenummer: 00127487.7
(22) Anmeldetag: 14.12.2000
(51) Int. Cl.: G06K 9/24

(54) **Schreibplatte mit einer Schrifteingabefläche**

(30) Priorität: 19.12.1999 DE 19961357
(71) Anmelder: Baltus, René, D-53125 Bonn (DE)
(72) Erfinder: Baltus, René, 53125 Bonn (DE); Woop, Marc-Bernd, 53123 Bonn (DE)
(74) Vertreter: COHAUSZ HANNIG DAWIDOWICZ & PARTNER

(57) **Zusammenfassung**

Die Erfindung betrifft eine Schreiblatte mit einer Schrifteingabefläche, wobei die Schrifteingabefläche einen Bereich der Schrift bildet und auf die Schrifteingabefläche ein Blatt insbesondere aus Papier legbar ist, auf das geschrieben wird und das die Schrifteingabefläche abdeckt, wobei in, unter und/oder seitlich der Schrifteingabefläche mindestens ein Leuchtfeld insbesondere eine Leuchtquelle angeordnet ist, das/die durch das Blatt hindurchscheint und die Schrifteingabefläche markiert.

## Beschreibung

Die Erfindung betrifft eine Schreibplatte mit einer Schrifteingabefläche, wobei die Schrifteingabefläche einen Bereich der Schrift bildet und auf die Schrifteingabefläche ein Blatt insbesondere aus Papier legbar ist, auf das geschrieben wird und das die Schrifteingabefläche abdeckt.

Elektro-mechanische Geräte zur Erfassung der Schriftdynamik sind bekannt, zum Beispiel aus der EP 0 560 356. Hier ist eine Platte auf Wägezellen montiert, so daß die mit herkömmlichen Schreibutensilien ausgeübte Schreibdynamik vierdimensional erfaßt wird. Nachteilig bei diesen Verfahren ist, daß bei dem Auflegen eines papierenen Vertragsformulares die Stelle an der unterschriben werden soll, schlecht zu erkennen ist. Das heißt, der Unterschreibende muß darauf achten, daß das Dokument möglichst genau mit der Unterschriftsfläche über der Schrifteingabefläche für den Schreibdruck gelegt, wird.

Eine Abhilfe wären rechtwinkelige Anschläge mit denen das Dokument ausgerichtet wird. Dies erfordert jedoch genormte Maße des Unterschriftfeldes auf dem Dokument. Ferner könnte jedes beliebige Dokument bequem unterschrieben werden.

Aufgabe der Erfindung ist es, die Benutzung einer Schrifteingabefläche der eingangs genannten Art zu erleichtern.

Diese Aufgabe wird erfindungsgemäß dadurch gelöst, daß in, unter und/oder seitlich der Schrifteingabefläche mindestens ein Leuchtfeld insbesondere eine Leuchtquelle angeordnet ist, das/die durch das Blatt hindurchscheint und die Schrifteingabefläche markiert.

Die Schreibplatte und/oder die Schrifteingabefläche bildet damit mindestens eine leuchtende Markierung die durch das zu beschreibende aufgelegte Blatt hindurch scheint und dem Schreibenden die Arbeit wesentlich erleichtert. Er trifft die Schrifteingabefläche mit großer Sicherheit.

Vorteilhafte Ausgestaltungen der Erfindung sind in den Unteransprüchen aufgeführt.

Ausführungsbeispiele der Erfindung werden im folgenden näher beschrieben.

Eine ebene Schreibplatte weist eine Schrifteingabefläche auf, die kleiner als die Schrift ist und die den vom Schreibinstrument erzeugten Druck mißt und an einen Computer zur Auswertung weitergibt. Zuvor wird auf die Schreibplatte ein Blatt Papier gelegt, das zu beschriften ist. Damit der Schreibende die unter dem Papier befindliche Schrifteingabefläche findet, ist in, unter und/oder seitlich der Schrifteingabefläche mindestens ein Leuchtfeld insbesondere eine Leuchtquelle angeordnet ist, das/die durch das Blatt hindurchscheint und die Schrifteingabefläche markiert.

Das Leuchtfeld/die Leuchtfelder insbesondere die Leuchtquelle(n) ist/sind punkt-, linien- und/oder flächenförmig. Das Leuchtfeld/die Leuchtfelder insbesondere die Leuchtquelle(n) ist/sind an mindestens einem Rand der Schrifteingabefläche angeordnet. Das Leuchtfeld/die Leuchtfelder insbesondere die Leuchtquelle(n) ist/sind linienförmig am unteren Rand der Schrifteingabefläche angeordnet. Das Leuchtfeld/die Leuchtfelder insbesondere die Leuchtquelle(n) umgeben die Schrifteingabefläche rahmenförmig. Das Licht dringt durch den Spalt zwischen Schrifteingabefläche und Schreibplatte. Das Leuchtfeld/die Leuchtfelder insbesondere Leuchtquelle(n) markieren mindestens zwei Ecken der Schrifteingabefläche. Die Schrifteingabefläche oder die die Schrifteingabefläche umgebendene Schreibplatte ist als Leuchtfeld ausgebildet. Das Leuchtfeld/die Leuchtfelder insbesondere Leuchtquelle(n) sind in dem Zeitraum eingeschaltet, in dem die Schrift, insbesondere eine Unterschrift durchzuführen und/oder die Schrifteingabefläche aktiviert ist.

In einer Ausführung ist vorgesehen, unter der Schreibplatte eine Leuchtquelle oder mehrere Leuchtquellen anzuordnen. Eine Wirkrichtung der Lichtstrahlen ist der Spalt zwischen dem Gehäuse und der frei gelagerten Schreibplatte. Dadurch entsteht um das gesamte mögliche Schriftfeld ein Leuchtkranz, der durch das papierene Dokument hindurch die Grenzen der Schreibplatte anzeigt und dem Schreibenden eine eindeutige Orientierungshilfe gibt.

Um das Leisten einer Unterschrift weiter zu verbessern, kann zusätzlich vorgesehen sein, in der Schreibplatte selber einen durchgängigen Spalt einzubringen, durch den ebenfalls eine Wirkrichtung der Lichtstrahlen in das Dokument entsteht. Der Spalt ist gefüllt mit lichtdurchlässigem Material oder die gesamte Schreibplatte ist mit einer lichtdurchlässigen Abdeckung versehen. Durch unterschiedliche Maßgabe der Spalte werden die Grenzen des Schriftfeldes und die Schreiblinie unterschieden.

Ist es erwünscht, das Schreibfeld auf der Schreibplatte selber zu begrenzen, wird mit etwas Abstand zum Rand in der Schreibplatte ein umlaufender, nur an einigen statisch nötigen Stellen unterbrochener Spalt eingebracht. Die Schriftlinie ist dann als ein etwas breiterer Spalt ausgearbeitet und somit leicht erkennbar. Diese Maßnahme hat den Vorteil, daß der Schreiber nicht in Gefahr gerät, mit seinem Schreibstift in das Ende der Schreibplatte zu gelangen, was sich störend bei der Wiedererkennung einer Unterschrift auswirkt.

Weiterhin ist vorgesehen, die Schreibplatte aus durchsichtigem Material mit seitlich oder darunter angeodneter Leuchtquelle zu fertigen. Die umlaufende Begrenzungslinie wird dunkel abgesetzt und ist auch als eine sich vom hellen Schriftfeld abhebende dunkle Linie vom Schreiber zu sehen. Die Schreiblinie ist wiederum etwas stärker ausgebildet und erleichtert die Schrifteingabe. Wird Acrylglas oder ein ähnliches Material genutzt, erlauben es eingebrachte, linienförmige Gefügestörungen, wie z.B. Einfräsungen, die Schreib- und Begrenzungslinien deutlich sichtbar hervorzuheben. Werden die Seiten der Schreibplatte zur Lichtquelle in einem 45-Grad-Winkel abgeschrägt und die Schrägen verspiegelt, treten diese deutlich sichtbar als Drei- oder vierseitiger, umlaufender Leuchtkranz hervor.

Einige der vorgenannten Maßnahmen erlauben es auch, unliniertes Papier ohne eine mit Hilfslinien versehenen Unterlage zu nutzen. Eine hilfreiche Maßnahme bei dem Ausfüllen von papierenen Formularen, die gleichzeitig elektronisch vorhanden sind und eigenhändig unterschrieben werden müssen. Die Formularinhalte und die juristisch relevanten Unterschriften liegen dann sowohl elektronisch, als auch auf Papier vor.

## Patentansprüche

1. Schreiblatte mit einer Schrifteingabefläche, wobei die Schrifteingabefläche einen Bereich der Schrift bildet und auf die Schrifteingabefläche ein Blatt insbesondere aus Papier legbar ist, auf das geschrieben wird und das die Schrifteingabefläche abdeckt, **dadurch gekennzeichnet,** daß in, unter und/oder seitlich der Schrifteingabefläche mindestens ein Leuchtfeld insbesondere eine Leuchtquelle angeordnet ist, das/die durch das Blatt hindurchscheint und die Schrifteingabefläche markiert.

2. Schreibplatte nach Anspruch 1, **dadurch gekennzeichnet**, daß das Leuchtfeld/die Leuchtfelder insbesondere die Leuchtquelle(n) punkt-, linien- und/oder flächenförmig ist/sind.

3. Schreibplatte nach Anspruch 1 oder 2, **dadurch gekennzeichnet**, daß das Leuchtfeld/die Leuchtfelder insbesondere die Leuchtquelle(n) an mindestens einem Rand der Schrifteingabefläche angeordnet ist/sind.

4. Schreibplattte nach Anspruch 3, **dadurch gekennzeichnet**, daß das Leuchtfeld/die Leuchtfelder insbesondere die Leuchtquelle(n) linienförmig am unteren Rand der Schrifteingabefläche angeordnet ist/sind.

5. Schreibplatte nach einem der vorherigen Ansprüche, **dadurch gekennzeichnet**, daß das Leuchtfeld/die Leuchtfelder insbesondere die Leuchtquelle(n) die Schrifteingabefläche rahmenförmig umgeben.

6. Schreibplatte nach Anspruch 5, **dadurch gekennzeichnet**, daß das Licht durch den Spalt zwischen Schrifteingabefläche und Schreibplatte dringt.

7. Schreibplatte nach einem der vorherigen Ansprüche, **dadurch gekennzeichnet**, daß das Leuchtfeld/die Leuchtfelder insbesondere Leuchtquelle(n) mindestens zwei Ecken der Schrifteingabefläche markieren.

8. Schreibplatte nach Anspruch 1, **dadurch gekennzeichnet**, daß die Schrifteingabefläche oder die die Schrifteingabefläche umgebendene Schreibplatte als Leuchtfeld ausgebildet ist.

9. Schreibplatte nach einem der vorherigen Ansprüche, **dadurch gekennzeichnet**, daß das Leuchtfeld/die Leuchtfelder insbesondere Leuchtquelle(n) in dem Zeitraum eingeschaltet sind, in dem die Schrift, insbesondere eine Unterschrift durchzuführen und/oder die Schrifteingabefläche aktiviert ist.
